# EUROPEAN PATENT SPECIFICATION

(11) **EP 2 539 221 B1**
(45) Date of publication and mention of the grant of the patent: **19.11.2014**
(21) Application number: 10795689.8
(22) Date of filing: 20.12.2010
(51) Int. Cl.: F16L 27/08

(54) **A FLUID SWIVEL FOR ALLOWING FLUID TRANSFER ACROSS A ROTARY INTERFACE**
EIN FLÜSSIGKEITSDREHGELENK ZUR ÜBERTRAGUNG VON FLÜSSIGKEIT ÜBER EINE ROTIERENDE SCHNITTSTELLE
UNE ROTULE DE FLUIDE POUR PERMETTRE LE TRANSFERT DE FLUIDE SUR UNE INTERFACE ROTATIVE

(30) Priority: 23.02.2010 EP 10154385
(43) Date of publication of application: 02.01.2013
(73) Proprietor: Single Buoy Moorings, Inc., 1723 Marly (CH)
(72) Inventor: HULDT, Tomas, Jacob, F-06320 Cap d'Ail (FR); FRANKEN, Wouter, Adriaan, Gerardus, F-06190 Roquebrune-Cap-Martin (FR)
(74) Representative: Nederlandsch Octrooibureau
(86) International application number: PCT/EP2010/070212
(87) International publication number: WO 2011/103936

(56) References cited:
- EP-A1- 0 561 038
- EP-A2- 0 195 115
- WO-A1-98/31963
- DE-A1- 2 049 280
- GB-A- 788 106
- GB-A- 1 021 864
- US-A- 4 844 485

## Description

### Field of the invention

The invention relates to a fluid swivel for allowing fluid transfer across a rotary interface between the end of a fluid line connected to the seabed and product piping on a vessel for gas and oil production. The invention relates more specifically to a high pressure swivel.

The fluid swivel is used in a structure which allows a vessel for gas and oil production to be connected to a geo-stationary duct for transporting hydrocarbons from the seabed towards the vessel or for injecting fluids, in liquid or gas form, like water into the wells for pressurization purposes or CO2 in depleted wells or gas caverns. The structure allows the vessel to weathervane with respect to this geo-stationary duct while maintaining a fluid-tide connection between the end of the geo-stationary duct and product piping on board.

### Background of the invention

From WO 98/31963 a swivel is known having a toroidal chamber for receiving hydrocarbons. The toroidal chamber is enclosed by a stationary inner wall and a rotary outer wall. The stationary inner wall is provided with a first guide for supplying hydrocarbons from a fluid line connected to the seabed towards the toroidal chamber. The rotary outer wall is provided with a further guide to allow the hydrocarbons to be forwarded towards product piping on board of a vessel.

In order to define the toroidal chamber between the two walls, the inner wall and the outer wall are located with their adjacent cylindrical surfaces in close proximity, whereby a relatively small upper annular gap and a lower annular gap are formed between the adjacent cylindrical surfaces of the walls on either side of the toroidal chamber. In the art the gaps are also known as 'seal extrusion gaps'.

In order to avoid any leaking, these gaps are sealed by means of sealing elements. These sealing elements normally comprise elastically deformable sealing rings which are of U-shaped or V-shaped form.

The sealing of swivels handling liquids or crude oils with limited gas content can also be achieved with a double sealing arrangement on either side of the toroidal chamber. The first or primary seals are positioned closest to the toroidal chamber and carry full pressure. The second or secondary seals are positioned at a distant of the first or primary seals and function to provide back-up in the event the first or primary seal should rupture.

The sealing of the seal extrusion gaps is more difficult when the swivel is used for the transfer of crude oils with high gas content or gas. This is due to the low viscosity of the fluids and the danger of fire and explosions in case of leakage. For these applications normally two pairs of facing seals are used. Within this pair of seals a barrier of liquid is maintained at a higher pressure than the fluid to be sealed in order to guarantee gas tightness.

In the known swivels the gaps are designed to have a minimal opening. However, a minimal gap width must be maintained such that possible deflections of the inner and the outer walls of the swivel will not cause the two elements to contact one another and thus prevent relative rotation of the two swivel elements.

In order to minimize the possible deformations of the inner and the outer wall due to pressure effects, the known swivel walls are made of cast steel with a wall thickness up to 240 mm for a swivel with a diameter of 2 m. Deformations are so prevented by the heavy masses of the inner and outer wall. The effect of these measures is that a swivel with a 2 m diameter may weigh 20 tons or more.

When designing a swivel, not only the deformations of the inner and the outer wall should be minimized, the design should also ensure that the stresses remain within the limits imposed by the Pressure Vessel Codes.

Hydrocarbons supplied to the swivels often have temperatures in the order of 20 to 120 ºC. During the transfer of the fluids the outer wall will be cooled off by the external ambient air, especially when the swivel is exposed to outside weather conditions and when the wind directly blows against the exterior of the swivel. Contrary to the outer wall, the inner wall will remain relatively hot. The temperature difference between the inner wall and the outer wall will generate deformations of the annular gap between the two elements. That means that the size of the initial extrusion gap should be chosen in order to allow for these temperature differences.

The temperature difference between the inner wall and the outer wall can also be important when the fluid transferred via the swivel is very cold; this is the case for swivels allowing the transfer of liquefied gases such as LPG, LNG, CO₂ and any other cold or cryogenic fluids.

In order to minimize variations in the extrusion gap dimensions, the outer wall could be insulated with a suitable insulation material, such as rubber. However, it should be noted that swivels are normally not used as a single element, but that they are stacked one on top of the other in order to form a swivel pack. These insulations add to the complexity of the resulting swivel stack and they make the inspection of such a swivel stack more complicated.

Another solution to avoid deformations is to add reinforcements around the inlets and the outlets of the swivel. These reinforcements add additional weight to the swivel and the resulting swivel stack.

In view of the disadvantages and limitations of the swivels according to the prior art it is therefore an object of the present invention to provide an improved swivel, which can be adapted to be used as a high pressure swivel, which is relatively insensitive to pressure variations and which can be used for transferring high pressure fluids while using a relatively light weight construction.

It is a further object of the invention to provide a swivel for transferring high pressure fluids, in which temperature fluctuations of the inner and the outer wall are reduced.

It is a further object of the invention to provide a swivel which can be combined with other swivels in order to form a swivel stack.

It is a further object of the invention to allow the construction of a turret structure, using the swivel and the swivel stack according to the invention.

According to a first aspect of the invention, the invention relates to a fluid swivel for allowing fluid transfer across a rotary interface between the end of a fluid line connected to the seabed and product piping on a vessel for transfer of fluids, wherein the swivel comprises an inner annular wall and an outer annular wall which are located with their adjacent cylindrical surfaces in close proximity, the inner wall and the outer wall defining a chamber, between their peripheral opposing faces, for receiving a fluid, wherein one of the walls is adapted to be connected to the end of the fluid line, which extends through that wall towards the chamber, in order to allow fluid supply towards the chamber and wherein the other annular wall of the swivel is adapted to be connected to the product piping and is provided with a duct to transport the fluid from the chamber towards the product piping, characterised in that at least a part of the outer wall of the swivel comprises a fibre reinforced polymer.

In cases where the swivel is a fluid injection swivel such as a water injection swivel used to maintain reservoir pressures for optimizing the hydrocarbons recovery process, the fluid is supplied from the topside facilities and routed subsea via the swivel stack for injection into dedicated injection wells. In these cases the fluid supply is directed from the piping towards the chamber and then transported from the chamber towards a riser duct which terminates at the injection well.

In the present description the wording 'high pressure' is used. For the purpose of the present invention the wording 'high pressure' is intended to include pressure of 50 bar and higher. Further the wording 'fluid' must be understood as fluid in a liquid phase or fluid in a gas phase.

According to a preferred embodiment of the invention at least one of the inner and the outer walls of the swivel comprise a first element from a first material and a second element from a second material, said second material comprising fibre reinforced polymer.

According to a preferred embodiment of the invention the swivel comprises carbon fibre reinforced polymer (CFRP).

An effect of these measures is the fact that fibre reinforced polymers, like carbon fibre reinforced polymer (CFRP) can be obtained with a very high Young's modulus and very high yield strength. These characteristics provide good stiffness and strength. By applying, fibre reinforced polymers, like carbon fibre reinforced polymer, on the outer parts of the swivel the wall thickness of said outer part can be greatly reduced. An important advantage of this is that the reduction in wall thickness greatly reduces the defects in the casting of the outer part of the swivels. Moreover, the reduction of the wall thickness improves the possibility of adequate non destructive examination of the swivel during its lifetime.

Another and related advantage is the fact that the reduction in the wall thickness will lead to a reduction in the weight of the swivel. This reduction has a direct effect on the size and the weight of related construction elements like supports, bolting and bearings that will be used in that those elements will be exposed to reduced associated forces.

An additional advantage of using fibre reinforced polymers, is the fact that, for instance, carbon fibre reinforced polymer, is known to have very good fatigue and corrosion resistance.

According to the invention it is possible that the swivel comprises glass fibre reinforced polymers (GFRP).

According to the invention it is possible that the swivel comprises Aramid fibre reinforced polymers (AFRP).

According to the invention it is possible that the chamber defined between the inner wall and the outer wall has essentially a toroidal shape.

According to a second aspect of the invention, the invention relates to a turret structure for fluid transfer that allows a vessel to be connected to the end of a geo-stationary fluid duct and for allowing product piping on the vessel, water injection and/or gas injection, to be connected to the end of said geo-stationary duct via a rotary interface, wherein the turret structure comprises a swivel according to the invention.

According to a third aspect of the invention, the invention relates to a vessel comprising the turret structure, according to the invention.

### Short description of the drawings:

The invention will be explained in detail with reference being made to the drawings, wherein:
Fig. 1 shows a swivel according to the prior art;
Fig. 2 shows a first embodiment of a production swivel according to the invention,
Fig. 3 shows an embodiment of a pipe swivel according to the invention, and
Fig. 4 shows in detail a possible connection between a first element of the wall of the swivel with a second element from a different material,

### Detailed description of the invention

A production vessel for hydrocarbons is provided with a turret in order to allow a vessel to rotate with respect to the end of a geo-stationary duct for transporting hydrocarbons towards the vessel. In order to allow the hydrocarbons to be transferred from this geo-stationary duct, towards product piping on the vessel, the turret is provided with a swivel stack, each swivel in this stack being used for a fluid tide connection between the stationary duct and the vessel.

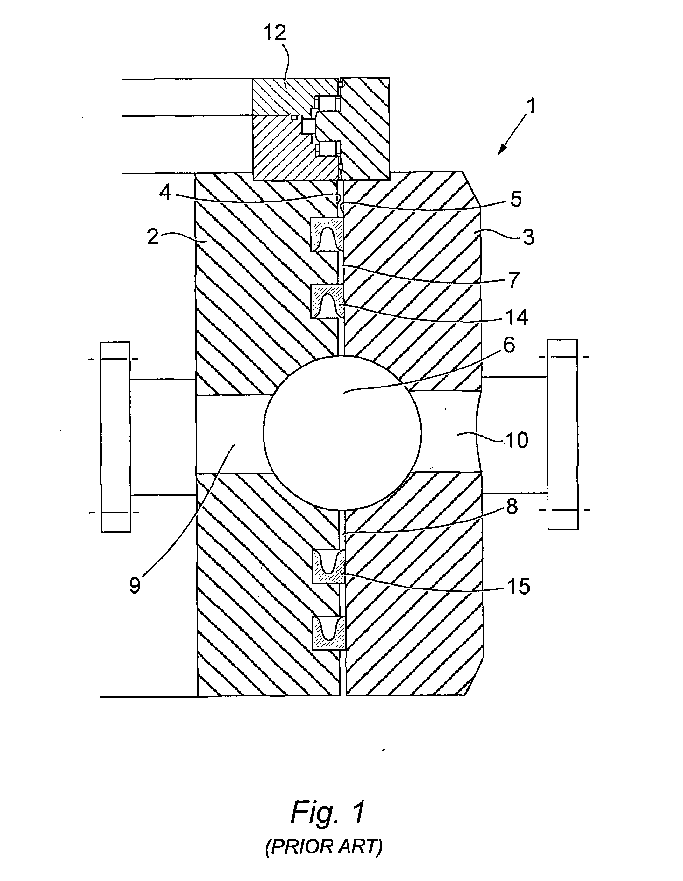

Figure 1 shows a swivel according to the prior art. The swivel 1 comprises an inner annular wall 2 and an outer annular wall 3 which are located with their adjacent cylindrical surfaces 4, 5 in close proximity. The inner wall and the outer wall define a toroidal chamber 6 and an upper gap 7 and a lower gap 8, between their peripheral opposing faces 4, 5.

The inner wall 2 is connected to the end of a geo-stationary duct, which extends through the inner wall 2 via a guide 9, in order to supply hydrocarbons towards the toroidal chamber 6. The outer wall 3 of the swivel 1 is rotatably connected to the inner wall 2 by means of a bearing 12. The outer annular wall 3 of the swivel 1 is provided with a duct 10 to transport the hydrocarbons from the toroidal chamber 6 towards product piping on the vessel.

The upper gap 7 and lower gap 8 between the cylindrical surfaces of the inner wall 2 and the outer wall 3 are sealed off by seals, like U-shaped or V-shaped elastically deformable sealing rings 14, 15.

The swivel 1 according to figure 1 is, for high pressure purposes, typically fabricated in duplex or super duplex. In order to withstand the high pressures in the swivel 1, the wall thickness of the walls 2 and 3 become so large that during production of the swivel 1 it is likely to encounter defects in the casting of the outer parts of the swivel 1.

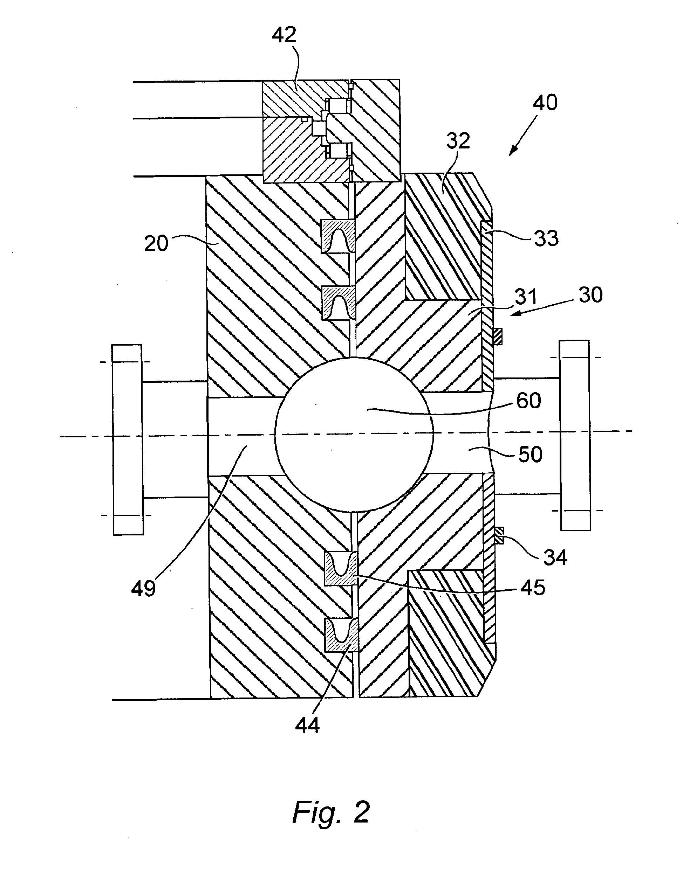

In Figure 2, a possible embodiment of the swivel 40 according to the invention is shown. Similar to swivel 1, according to Figure 1, the swivel 40 comprises an inner wall 20 and an outer wall 30, defining between the two a toroidal chamber 60 in order to receive hydrocarbons. The hydrocarbons will be fed via a geo-stationary duct and via a guide 49 which forms part of the inner wall 20. The hydrocarbons are transported from the chamber 60 via the guide 50 in the direction of product piping on board of a vessel.

As shown on Figure 2, part of the outer wall 3 is formed by an insert 32 which replaces part of the volume of the original outer wall 3 of the swivel as shown in Figure 1. The insert 32 is received by a wall element 31. The insert 32 is secured on top of the element 31 by means of a plate 33 and fixing means like bolds 34.

According to Figure 2, the wall element 31 is made of a first element, like for instance duplex or super-duplex. The insert 32 is fabricated from a fibre-reinforced polymer, like for instance carbon fibre-reinforced polymer. The use of two different materials, in order to produce the outer wall 30 of the swivel 40 has the effect that the overall weight of the swivel 40 is importantly reduced compared to the swivel 1 according to the prior art.

In Figure 2, a first embodiment of the swivel according to the invention is shown. It is possible to replace another part of either the inner wall 20 or the outer wall 30 by an element or insert fabricated using fibre-reinforced polymer.

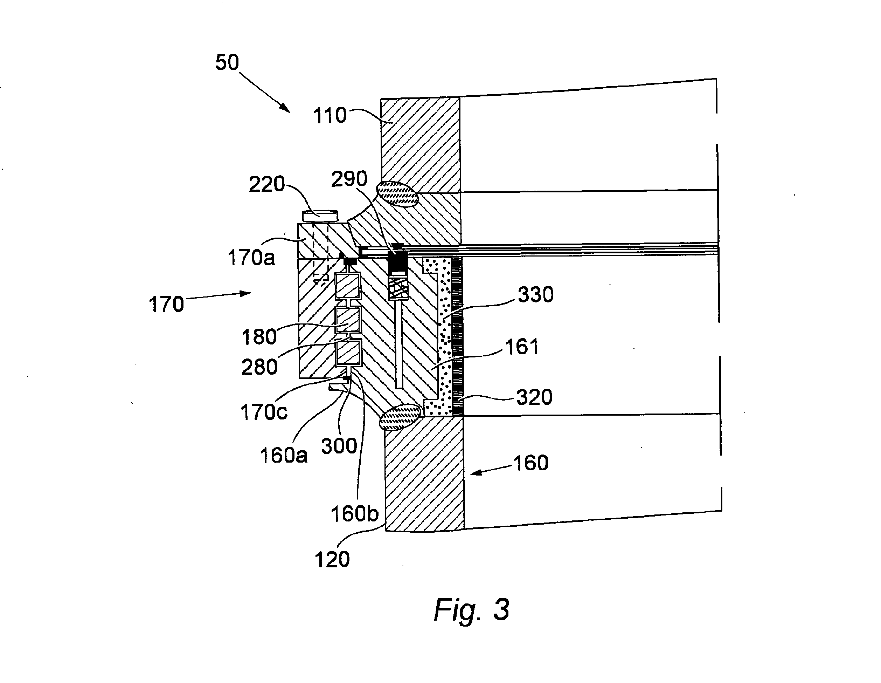

In Figure 3, a possible embodiment of a pipe swivel 50 according to the invention is shown. Pipe swivel joints are commonly used by the oil and gas industry for interconnecting lengths of metal pipe to form an articulated flow conduit between two locations. Pipe swivel joints can be used in a product flowline extending between a subsea station on the ocean floor and a buoy or other surface floating facility: for example, an offshore mooring and loading terminal for marine tankers. Swivel joints employed for this purpose are subjected to constant motion, to a corrosive environment, and to relatively high external hydrostatic pressures, and it is imperative that they do not leak either outwardly, thereby polluting the ocean environment, or inwardly and thus contaminate the product in the flowline. Figure 3 discloses a swivel joint 50 for connecting together a pair of pipes 110 and 120, the joint 50 comprising an annular inner wall 160, an annular outer wall 170 surrounding the inner wall 160, and a plurality of bearings 180 that rotatably interconnect the inner and outer walls 160 and 170. The outer wall 170 includes a radially inward extending flange 170a secured to a sleeve-like element 170b by a plurality of capscrews 220 (only one shown). The inner wall 160 includes a radially outward extending flange 160a. The bearings 180 reside in a bearing race chamber 280 that is defined by an outer surface 160b of the element 160, an inner surface 170c of the element 170b, and a pair of dynamic seals 290, 300 between the elements 160, 170. The dynamic fluid seal 290 is retained in functional position between the inward extending flange 170a and the adjacent end of the inner wall 160, and the dynamic fluid seal 300 is likewise retained between the outward extending flange 160a and the adjacent end of the outer wall 170.

Part of the inner wall 160 is formed by an insert 320 which replaces part of the volume of the original outer wall 160 of the swivel; the insert 320 is received by a wall element 161. The insert 320 is secured on top of the element 161 by means of a plate 330 and fixing means like bolds 340.

According to Figure 3 and as shown in Figure 2, the wall element 310 is made of a first element; the insert 320 is fabricated from a fibre-reinforced polymer, like for instance carbon fibre-reinforced polymer. The use of two different materials, in order to produce the inner wall 160 of the swivel 50 has the effect that the overall weight of the swivel 50 is greatly reduced compared to the swivel 1 according to the prior art.

In Figure 3, a first embodiment of a pipe swivel according to the invention is shown. It is possible to replace another part of either the outer wall 170 or the inner wall 160 by an element or insert is made of fibre-reinforced polymer.

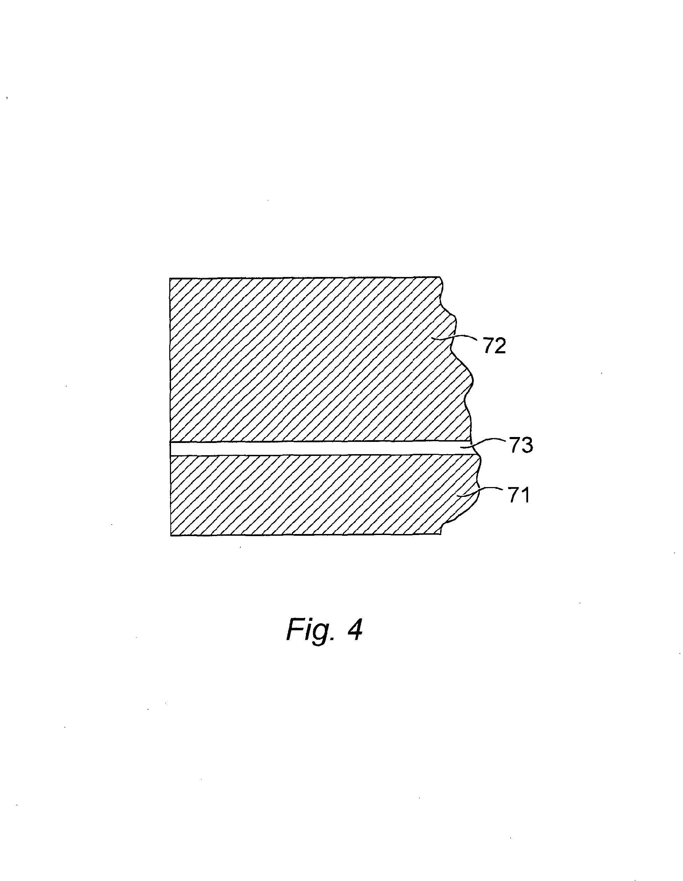

In Figure 4, a possible connection between the first element 71 of the wall of a swivel and a second element 72 of the wall of a swivel, in a second material, is shown. According to Figure 3, the first element 71 is, for instance, fabricated in duplex or super-duplex. The second element 72 is fabricated from a fibre-reinforced polymer, like carbon fibre-reinforced polymer. In order to ensure a proper connection between the two elements 71 and 72, the exposed surface of the first element 71 should be properly prepared in order to obtain the adapted cleanliness and roughness in order for an inter layer 73 to be connected to the exposed surface of the element 71. The second element 72 is connected to the first element 71 by using this inter layer 73 which, for instance, is a glass fibre inter layer.

## Claims

1. A pipe swivel (50) for allowing fluid transfer across a rotary interface for joining a pair of pipes for transfer of fluids, wherein the swivel comprises an inner annular wall (160) and an outer annular wall (170) surrounding the inner wall (160) which are located with their adjacent cylindrical surfaces in close proximity, defining a chamber where a bearing resides that rotatably interconnect the inner (160) and outer walls (170) to form an rotatable flow conduit between two locations, **characterised in that** at least a part (320) of the inner wall (160) of the swivel (50) comprises a fibre reinforced polymer.

2. A fluid swivel (40) for allowing fluid transfer across a rotary interface between the end of a fluid line connected to the seabed and product piping on a vessel for transfer of fluids, wherein the swivel (40) comprises an inner annular wall (20) and an outer annular wall (30) which are located with their adjacent cylindrical surfaces in close proximity, the inner wall (20) and the outer wall (30) defining a chamber (60), between their peripheral opposing faces, for receiving a fluid, wherein one of the walls (20, 30) is adapted to be connected to the end of the fluid line, which extends through that wall towards the chamber (60), in order to allow fluid supply towards the chamber (60) and wherein the other annular wall (20, 30) of the swivel is adapted to be connected to the product piping and is provided with a duct to transport the fluid from the chamber (60) towards the product piping, **characterised in that** at least a part (32) of the outer wall (3) of the swivel (40) comprises a fibre reinforced polymer.

3. Swivel (40, 50) according to claim 1 or 2, wherein at least one of the inner and the outer walls (20, 60, 30, 170) of the swivel (40, 50) comprises a first element (31, 161) from a first material and a second element (32, 320) from a second material, said second material comprising fibre reinforced polymer.

4. Swivel (40, 50) according to claim 1, 2, or 3, wherein the swivel (40, 50) comprises carbon fibre reinforced polymer (CFRP).

5. Swivel (40, 50) according to claim 1, 2, or 3, wherein the swivel (40, 50) comprises glass fibre reinforced polymers (GFRP).

6. Swivel (40, 50) according to claim 1, 2, or 3, wherein the swivel (40, 50) comprises Aramid fibre reinforced polymers (AFRP).

7. Swivel (40) according to claims 2 to 7, wherein the chamber (60) defined between the inner wall (20) and the outer wall (30) has essentially a toroidal shape.

8. Swivel (40) according to any of the preceding claims 2-7, wherein the swivel (40) is a high pressure swivel.

9. Swivel (40) according to claims 2 to 7, wherein the swivel (40) is a water injection swivel.

10. Swivel (40) according to claims 2 to 7, wherein the swivel (40) is a gas injection swivel.

11. Turret structure for allowing a vessel for production or storage of hydrocarbons to be connected to the end of a geo-stationary fluid duct and for allowing product piping on the vessel, gas injection and/or water injection to be connected to the end of said geo-stationary duct via a rotary interface, wherein the turret structure comprises the swivel (40) according to one of the claims 2-10.

12. Vessel comprising the turret structure, according to claim 11.

## Patentansprüche

1. Rohrdrehkopf (50) zur Ermöglichung eines Flüssigkeitstransfers über eine drehbare Schnittstelle zur Verbindung eines Rohrpaares zum Transfer von Flüssigkeiten, wobei der Drehkopf eine ringförmige Innenwand (160) und eine die Innenwand (160) umgebende, ringförmige Außenwand (170) umfasst, die mit ihren benachbarten zylindrischen Oberflächen in unmittelbarer Nähe zueinander liegen und eine Kammer definieren, in der sich ein Lager befindet, das die Innen- (160) und Außenwand (170) drehbar miteinander verbindet, um eine drehbare Strömungsleitung zwischen zwei Orten zu bilden, **dadurch gekennzeichnet, dass** zumindest ein Teil (320) der Innenwand (160) des Drehkopfes (50) ein faserverstärktes Polymer umfasst.

2. Flüssigkeitsdrehkopf (40) zur Ermöglichung eines Flüssigkeitstransfers über eine drehbare Schnittstelle zwischen dem Ende einer mit dem Meeresboden verbundenen Flüssigkeitsleitung und der Produktrohrleitung auf einem Schiff zum Transfer von Flüssigkeiten, wobei der Drehkopf (40) eine ringförmige Innenwand (20) und eine ringförmige Außenwand (30) umfasst, die mit ihren benachbarten zylindrischen Oberflächen in unmittelbarer Nähe zueinander liegen, wobei die Innenwand (20) und die Außenwand (30) zwischen ihren peripheren gegenüberliegenden Flächen eine Kammer (60) zur Aufnahme einer Flüssigkeit definieren, wobei eine der Wände (20, 30) angepasst ist, um mit dem Ende der Flüssigkeitsleitung verbunden zu werden, die sich durch diese Wand zur Kammer (60) erstreckt, um eine Flüssigkeitszufuhr zur Kammer (60) zu ermöglichen, und wobei die andere ringförmige Wand (20, 30) des Drehkopfes angepasst ist, um mit der Produktrohrleitung verbunden zu werden, und mit einer Leitung versehen ist, um die Flüssigkeit von der Kammer (60) zur Produktrohrleitung zu transportieren, **dadurch gekennzeichnet, dass** zumindest ein Teil (32) der Außenwand (30) des Drehkopfes (40) ein faserverstärktes Polymer umfasst.

3. Drehkopf (40, 50) nach Anspruch 1 oder 2, wobei zumindest eine der Innen- und der Außenwand (20, 60, 30, 170) des Drehkopfes (40, 50) ein erstes Element (31, 161) aus einem ersten Material und ein zweites Element (32, 320) aus einem zweiten Material umfasst, wobei das zweite Material faserverstärktes Polymer umfasst.

4. Drehkopf (40, 50) nach Anspruch 1, 2 oder 3, wobei der Drehkopf (40, 50) kohlenstofffaserverstärktes Polymer (CFRP) umfasst.

5. Drehkopf (40, 50) nach Anspruch 1, 2 oder 3, wobei der Drehkopf (40, 50) glasfaserverstärkte Polymere (GFRP) umfasst.

6. Drehkopf (40, 50) nach Anspruch 1, 2 oder 3, wobei der Drehkopf (40, 50) aramidfaserverstärkte Polymere (AFRP) umfasst.

7. Drehkopf (40) nach Anspruch 2 bis 7, wobei die zwischen der Innenwand (20) und der Außenwand (30) definierte Kammer (60) im Wesentlichen eine toroidale Form aufweist.

8. Drehkopf (40) nach einem der vorstehenden Ansprüche 2 - 7, wobei der Drehkopf (40) ein Hochdruckdrehkopf ist.

9. Drehkopf (40) nach Anspruch 2 bis 7, wobei der Drehkopf (40) ein Wassereinspritzdrehkopf ist.

10. Drehkopf (40) nach Anspruch 2 bis 7, wobei der Drehkopf (40) ein Gaseinspritzdrehkopf ist.

11. Turmstruktur zur Ermöglichung der Verbindung eines Schiffes zur Herstellung oder Lagerung von Kohlenwasserstoffen mit dem Ende einer geostationären Flüssigkeitsleitung und zur Ermöglichung der Verbindung der Produktrohrleitung auf dem Schiff, Gaseinspritzung und/oder Wassereinspritzung mit dem Ende der geostationären Leitung über eine drehbare Schnittstelle, wobei die Turmstruktur einen Drehkopf (40) nach einem der Ansprüche 2 - 10 umfasst.

12. Schiff umfassend die Turmstruktur nach Anspruch 11.

## Revendications

1. Rotule de tuyau (50) destinée à permettre un transfert de fluide à travers une interface rotative pour relier une paire de tuyaux pour transfert de fluides, la rotule comprenant une paroi annulaire intérieure (160) et une paroi annulaire extérieure (170) entourant la paroi intérieure (160) qui sont positionnées en ayant leurs surfaces cylindriques adjacentes à proximité étroite, définissant une chambre où est situé un palier qui relie mutuellement de manière rotative la paroi intérieure (160) et la paroi extérieure (170) pour former un conduit d'écoulement rotatif entre deux emplacements, **caractérisée en ce qu'**au moins une partie (320) de la paroi intérieure (160) de la rotule (50) est constituée d'un polymère renforcé par des fibres.

2. Rotule de tuyau (40) destinée à permettre un transfert de fluide à travers une interface rotative entre l'extrémité d'une ligne de fluide reliée au fond de la mer et une tuyauterie de production située sur un navire pour transfert de fluides, la rotule (40) comprenant une paroi annulaire intérieure (20) et une paroi annulaire extérieure (30) qui sont positionnées en ayant leurs surfaces cylindriques adjacentes à proximité étroite, la paroi intérieure (20) et la paroi extérieure (30) définissant une chambre (60), entre leurs faces périphériques opposées, pour recevoir un fluide, l'une des parois (20, 30) étant adaptée pour être reliée à l'extrémité de la ligne de fluide, qui s'étend à travers cette paroi en direction de la chambre (60), afin de permettre une alimentation de fluide en direction de la chambre (60) et l'autre paroi annulaire (20, 30) de la rotule étant adaptée pour être reliée à la tuyauterie de production étant munie d'un conduit pour transporter le fluide depuis la chambre (60) en direction de la tuyauterie de production, **caractérisée en ce qu'**au moins une partie (32) de la paroi extérieure (30) de la rotule (40) est constituée d'un polymère renforcé par des fibres.

3. Rotule (40, 50) selon les revendications 1 ou 2, dans laquelle au moins une parmi des parois intérieure et extérieure (20, 60, 30, 170) de la rotule (40, 50) comprend un premier élément (31, 161) constitué d'un premier matériau et un second élément (32, 320) constitué d'un second matériau, le second matériau étant constitué d'un polymère renforcé par des fibres.

4. Rotule (40, 50) selon les revendications 1, 2, ou 3, dans laquelle la rotule (40, 50) est constituée d'un polymère renforcé par des fibres de carbone (CFRP).

5. Rotule (40, 50) selon les revendications 1, 2, ou 3, dans laquelle la rotule (40, 50) est constituée de polymères renforcés par des fibres de verre (GFRP)

6. Rotule (40, 50) selon les revendications 1, 2, ou 3, dans laquelle la rotule (40, 50) est constituée de polymères renforcés par des fibres d'aramide (AFRP).

7. Rotule (40) selon les revendications 2 à 7, dans laquelle la chambre (60) définie entre la paroi intérieure (20) et la paroi extérieure (30) a essentiellement une forme toroïdale.

8. Rotule (40) selon l'une quelconque des revendications 2 à 7 qui précèdent, dans laquelle la rotule (40) est une rotule haute pression.

9. Rotule (40) selon les revendications 2 à 7, dans laquelle la rotule (40) est une rotule d'injection d'eau.

10. Rotule (40) selon les revendications 2 à 7, dans laquelle la rotule (40) est une rotule d'injection de gaz.

11. Structure de tourelle pour permettre à un navire de production ou de stockage d'hydrocarbures d'être relié à l'extrémité d'un conduit de fluide géostationnaire et pour permettre à une tuyauterie de production, située sur le navire, d'injection de gaz et/ou d'injection d'eau, d'être reliée à l'extrémité du conduit géostationnaire par l'intermédiaire d'une interface rotative, la structure de tourelle comprenant la rotule (40) selon l'une des revendications 2 à 10.

12. Navire comprenant la structure de tourelle selon la revendication 11.
